# EUROPEAN PATENT APPLICATION

(11) **EP 4 439 344 A1**
(43) Date of publication of application: **02.10.2024**
(21) Application number: 23165153.0
(22) Date of filing: 29.03.2023
(51) Int. Cl.: G06F 21/10

(54) **A METHOD FOR PROVIDING AT LEAST ONE USER LICENSE FOR AN APPLICATION FOR AT LEAST ONE DEVICE BY A MANAGEMENT SYSTEM, COMPUTER PROGRAM PRODUCT, COMPUTER-READABLE STORAGE MEDIUM, AS WELL AS MANAGEMENT SYSTEM**

(71) Applicant: Siemens Aktiengesellschaft, 80333 München (DE)
(72) Inventor: Scholz, Andreas, 85635 Höhenkirchen-Siegertsbrunn (DE); Setia, Chintan Singh, 91301 Forchheim (DE)
(74) Representative: Siemens Patent Attorneys

(57) **Abstract**

The invention relates to a method for providing at least one user license (12) for an application (14) for at least one device (16) by a management system (10), comprising the steps of providing the at least one user license (12) to be managed by a license management module (18) of the management system (10); determining a usage of the at least one user license (12) depending on a stored usage input (62) for the at least one device (16) by the license management module (18); and - providing the at least one user license (12) for the at least one device (16) depending on the determined usage by the license management module (18). Furthermore, the invention relates to a computer program product, computer-readable storage medium as well as to a management system (10).

## Description

The invention relates to a method for providing at least one user license for an application for at least one device by a management system. Furthermore, the invention relates to a computer program product, a computer-readable storage medium, as well as to a management system.

Management application licensing is difficult in industrial edge environments. Customer will have large numbers of applications, many more than, for example, into today's systems. It is easily possible that a simple user case requires a whole set of licenses, for example, a license for a connector application that fetches data from the field, some preprocessing applications that add additional metadata from an engineering system, some workflow applications such as a Node-RED application and ultimately some dashboard or cloud connector applications to display/send the data somewhere.

The situation is additionally complicated because edge systems are inherently distributed systems where applications are distributed across multiple systems. The license distribution has to follow that architecture. These constraints make classic licensing approaches hard to use because the complexity and manual efforts required with these tools make them practically impossible to use.

A widely used mechanism is to provide the customer with individual license files that are bound to a specific target hardware, for example, using hard disk identifiers or similar hardware identifications. While this mechanism works for edge scenarios, the sheer number of applications would require the operator to handle hundreds to thousands of license files for a given factory-plan. Given the trend to subscription-based business models, this situation is even worse as new licenses have to be issued whenever the subscription is extended. So, the operator has to challenge not only once, but once a year or even more often, depending on the duration of the subscription period.

Another widely used mechanism are floating licenses and license services where licenses are checked out at runtime by the client application. Many engineering tools today use these models.

It is an object of the invention to provide a method, a computer program product, a computer-readable storage medium, as well as a management system, by which an efficient way of managing licenses is provided.

This object is solved by a method, a computer program product, a computer-readable storage medium, as well as a management system according to the independent claims. Advantageous forms of embodiments are presented in the dependent claims.

One aspect of the invention relates to a method for providing at least one user license for an application for at least one device by a management system. The at least one user license is provided to be managed by a license management module of the management system. A usage of the at least one user license is determined depending on a stored usage input for the at least one device by the license management module. The at least one user license is provided for the at least one device by the license management module.

Therefore, after a customer purchases a product/enters a subscription agreement, a so-called market place may inform the license management module, which may also be regarded as a license server, about the purchase. For use cases in which, for example, offline requirements are important, the customer can assign the licenses from this big pool to an intermediate on-premises system, a so called two-layer system.

The assignment, regardless if done directly from a cloud server or via an intermediate system, is done in a new way. The customer does not assign a specific individual license anymore, as it is typically done in the state of the art. Instead, the license server/license management module stores an "intent" (usage input) that describes that user decision, in particular, remembers the user intents, for example, to assign a license of a certain type to a specific application instance, which is currently running on a specific device.

When the application is started on the device, it may contact the license management module and ask to check out a license. As part of the request, the application provides context information such as its identity, the device it is running on and additional attributes that are related to licensing, such as a list of add-ons currently used by the application. The license management module, in particular after checking the identity and authenticating the application, matches the application request to the stored intents and the stored licenses. If a match can be found, the license management module assigns the license to the specific combination of application and device and return it as a response to the calling application. The license management module also remembers this "mapping" of licenses to devices.

Therefore, instead of specific mapping of licenses to applications or devices, the management system remembers user intents, requests and license information. These are matched on requests from applications. Therefore, intents allow to express license management intentions on a high abstraction level. The intents may be captured as inputs and ay be stored in a storing device of the electronic computing device. The operator/Customer may say that, for example, a license belongs to a certain production line, but he does not care to which device in that line. If the license has to be moved, for example, when a device is replaced or to optimize performance, there is no operator involvement needed. During deinstallation of the old instance, the license is returned, and the intent may assign the license to the new instance once it starts up.

Furthermore, intents can easily handle use cases where a license expires and has to be replaced with a "follow-up license". This even works if the follow-up license is taken into consideration from another subscription or order or whatever, as there is no strict binding between license identifications and targets. As long as the replacement license matches the criteria specified in the intent, it can be assigned without any operator involvement. This even works for use cases where one license is replaced by another one, for example, a base version with a pro-version, without needing manual operator intervention.

According to an embodiment, the license management module is provided as an online server. In particular, for example, the license module is provided as a cloud-based license server. Therefore, a customer licenses are stored and managed online and the licenses are declaratively assigned to devices/application instances. Therefore, a customer does not have to provide own servers, but is able to get managed by the cloud-based server.

In another embodiment, the license management module comprises a first layer, which is provided as an online server, and a second layer, which is provided as a local server. In particular, for use cases in which offline requirements are important, the customer may assign the licenses from this big pool to an intermediate on-premises system, in particular the two-layer system. The intermediate on-premises system may be the second layer. In the case of a two-layer system, the license management server, in particular the first layer, creates a license file and transfers it to the intermediate system, in particular the second layer. The end result of this step is that the intermediate license server processes a subset of the license present in the cloud license server.

In another embodiment, metadata of the at least one license are taken into consideration by managing the license. In particular, as metadata a lifetime of the license and/or an expiry date of the license and/or a license attribute are taken into consideration. Therefore, licenses may optionally contain additional metadata such as lifetime, expiry time of licenses, license attributes such as trial or non-productive or furthermore attributes. Therefore, beyond this basic information of the input, the intent can also contain additional metadata. Therefore, a more efficient managing of the license is provided.

In another embodiment, the stored usage input is determined depending on a historical usage of that user license. For example, which license is used for which device/application is stored in a storage device as the historical usage. Therefore, the management system can determine the usage depending on the historical usage.

In another embodiment, a priority of a device from a plurality of devices is determined and depending on the priority the at least one user license is provided. Therefore, the intents, which may be regarded as the usage input, may furthermore also specify rules that can be used to assign licenses to applications/devices that are not known at the time of creation of the intent. For example, an intent could specify that three licenses may be assigned to devices in a special production line. Intents can be ordered by priority and are executed in order of priority. It is thus possible to specify via intents that, for example, a certain set of licenses, should go first to one set of devices and the leftovers to another set.

In another embodiment, the license is managed such, that add-ons required by the at least one device and/or application are taken into consideration. In particular, the license comprises additional attributes that are related to licensing, such as a list of add-ons currently used by the application. The intent mechanism can also be extended to include not only the base license of an application but also include the add-ons of so-called feature licenses. A user may decide to assign not only the base license but also the license for feature A and B to an application instance, wherein the features A and B are the add-ons. The managing and checkout procedures work the same as outlined above. However, it might be the case that the intent can only be partially fulfilled in that case, for example, the application will run at reduced functionality because only some of the add-ons can be matched. Therefore, also add-ons can be effectively managed.

In another embodiment, a warning message for an expiration of the at least one user license is generated by the license management module. In particular, the warning message is generated for a user of the management system. For example, the warning message can be generated in a predetermined time interval before the expiration, and therefore the user can, for example, purchase the license in order to use the license also in the future.

In another embodiment, at least a second application for a second device is provided, wherein at least a second user license is provided, and depending on individual specifications of a first device and the second device the license management module manages the licenses such, that the individual specifications are fulfilled. For example, the first device may use the application with a first add-on, and the second device may use the application with a second add-on. The management system then manages the licenses such that the license with the first add-on is assigned to the first device, and the license with the second add-on is assigned to the second device. Therefore, the management of the licenses is effectively performed.

In another embodiment, if a new device is installed, the license management module assigns the at least one user license to the new installed device. Therefore, a user of the management system does not have to re-manage the new license to the new device, because the management system provides a managing of the newly installed device and the assigning of the license to the newly installed device. Therefore, an automated way of managing licenses is provided.

In another embodiment, the license management module manages a plurality of different licenses for a plurality of different applications and/or devices. Therefore, the management system can be provided in a production line with different applications and different devices, wherein different licenses are managed.

In particular, the method is a computer-implemented method. Therefore, another aspect of the invention relates to a computer program product comprising program code means for performing a method according to preceding aspect.

Another aspect of the invention relates to a computer-readable storage medium comprising at least the computer program product according the preceding aspect.

A still further aspect of the invention relates to a management system for providing at least one user license for an application for at least one device, comprising at least one license management module, wherein the management system is configured for performing a method according to the preceding aspect. In particular, the method is performed by the management system.

In particular, the license management module, at least a part of the license management module, is provided as an electronic computing device. The electronic computing device may comprise electronic means, for example, processors, circuits, in particular integrated circuits, and further electronic means for performing the method.

Advantageous forms of configuration of the method are to be regarded as advantageous forms of configuration of the computer program product, the computer-readable storage medium as well as the management system. The management system comprises means for performing a method according to the preceding aspect.

Independent of the grammatical term usage, individuals with male, female or other gender identities are included within the term.

Further features of the invention result from the claims, the figures and the figure description. The features and combinations of features mentioned above in the description, as well as the features and combinations of features mentioned below in the figure description and/or shown alone in the figures, can be used not only in the combination indicated in each case, but also in other combinations without departing from the scope of the invention.

The invention will now be explained in more detail with reference to preferred examples of embodiments and with reference to the accompanying drawings.

Therefore,
- Fig. 1: shows a schematic block diagram according to a first embodiment of the management system; and
- Fig. 2: another schematic block diagram according to another embodiment of the management system.

In the figures, same elements are shown with the same reference signs.

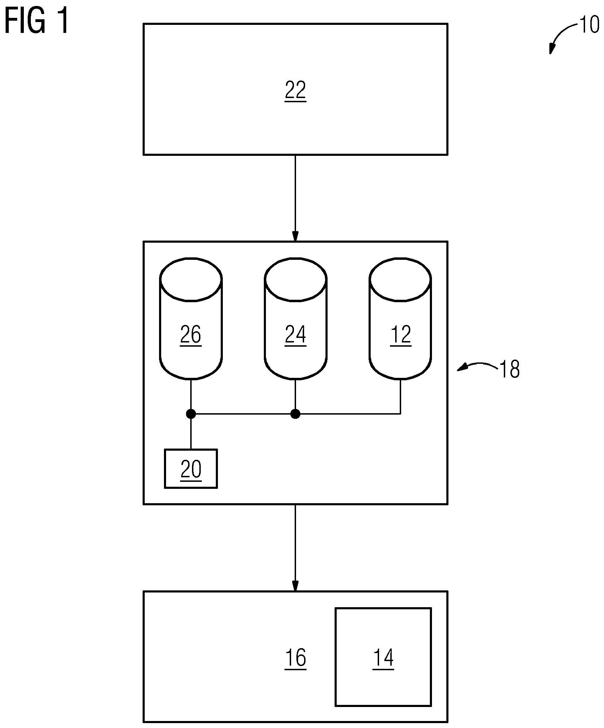

Fig. 1 shows a schematic block diagram according to an embodiment of a management system 10. The management system 10 is configured for providing at least one user license 12 for an application 14 for at least one device 16. The management system 10 therefore comprises at least one license management module 18. The license management module 18 comprises at least one electronic computing device 20, wherein the electronic computing device 20 may comprise at least a computer-readable storage medium as well as a computer program product. Furthermore, the electronic computing device 20 may comprise processors, circuits, in particular integrated circuits, and further electronic means.

Furthermore, as shown in Fig. 1, the license 12 may be provided by a so-called marketplace 22. The license management module 18 further shows a mapping 24 as well as at least one stored usage input 26.

According to an embodiment for providing the at least one user license 12 for the application 14, the at least one user license 12 to be managed is provided, for example, from the market place 22, to be managed by the license management module 18. The usage of the at least user license 12 is determined depending on the stored usage input 26 for the at least one device 16 by the license management module 18. The at least one user license 12 is provided for the at least one device 16 by the license management module 18 depending on the determined usage.

In particular, Fig. 1 shows that the license management module 18 is provided as an online server.

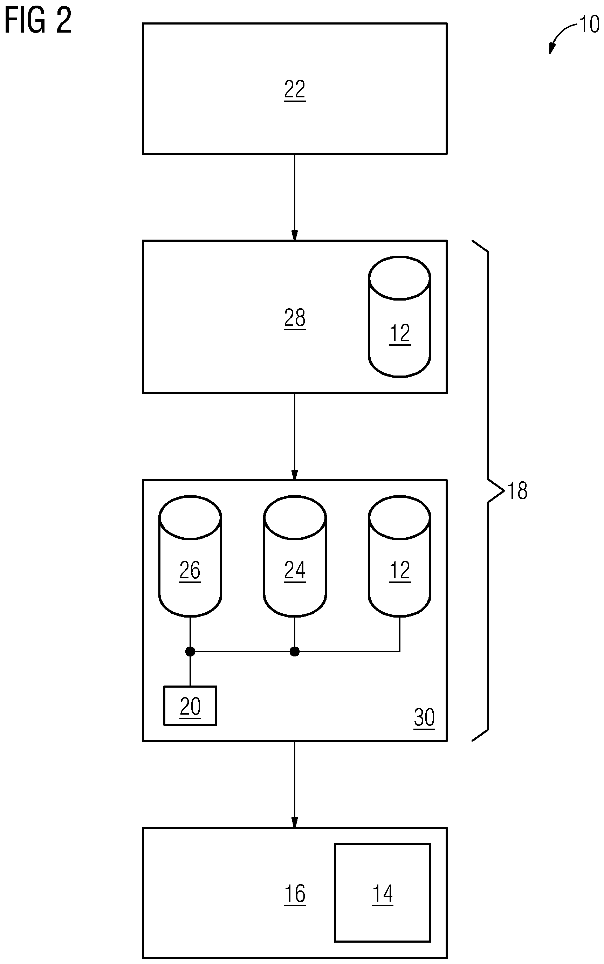

Alternatively to Fig. 1, Fig. 2 shows another schematic block diagram according to an embodiment of the management system 10. In Fig. 2 it is shown that the license management module 18 may comprise a first layer 28 and a second layer 30. The first layer 28 is provided as an online server, and the second layer 30 is provided as a local server.

In particular, Fig. 1 and 2 therefore show that after a customer purchases a product/enters a subscription agreement, the market place 22 informs the license management module 18, which may, for example, a cloud-based license server, about the purchase. For use cases in which offline requirements are important, the customer can assign the licenses 12 from this big pool to an intermediate on-premises system, which is shown in Fig. 2. Fig. 2 shows in particular a so-called two-layer system, wherein Fig. 1 shows a one-layer system.

In the case of a two-layer system, the license management module 18 creates a license file and transfers to the second layer 30. The end result of this step is that the second layer 30 processes a subset of the licenses 12 present in the first layer 28.

Licenses 12 can optionally contain additional metadata such as lifetime/expiry time of licenses 12, license attributes such as trial or non-productive.

The assignment, regardless of if it is done directly from a cloud or via the two-layer system, is done in a new way. The customer does not assign a specific individual license 12 anymore, but the license management module 18 stores an usage input 26 which may also be regarded as an intent, that describes this user decision and, for example, remembers that the user intends to assign a license 12 to a certain type of an application instant which is currently running on a specific device 16. Beyond this basic information, the intent can also contain additional metadata, as already mentioned.

The usage input 26 can furthermore also specify rules that can be used to assign licenses 12 to applications 14/devices 16 that are not known at the time of creation of the usage input 26. For example, a usage input 26 could specify that three licenses 12 for the application 14 can be assigned to devices 16 in a special production line. Intents can be ordered by priority and may be executed in order of priority. It is thus possible to specify via intents that, for example, a certain set of licenses 12, should go first to one set of devices 16 and the leftovers to another set.

When the application 14 is started on a device 16, it contacts the license server and asks to checkout a license 12. As part of the request, the application 14 provides context information such as its identity, the device 16 it is running on, additional attributes that are related to licensing, such as a list of add-ons currently used by the application 14.

The license management module 18, is in particular checking the identity and the authentication of the application 14, matches the application's request to the stored intents and the stored licenses 12. If a match can be found, the license management module 18 assigns the license 12 to the specific combination of application 14 and device 16 and returns it as a response to the calling application 14. The license management module 18 also remembers this as mapping 24 of licenses 12 to devices 16.

As a mechanism, how the application may request a license 12, it is just mentioned as an example, that the application 14 may directly request a license 12 from the license management module 18 via a web-based API. Alternatively, as an example, the license 12 could be transferred as a file between the license management module 18 and the device 16 and is made available to the application 14 via the file system. Furthermore alternatively, there might be a local license store on the device 16 that is filled from the license management module 18, and that provides a local API to the application 14.

Similarly, just for example, how the application 14 may process and react to presence and absence/expiry of the license 12, the application 14 may show a warning/nagging screen to inform users, the application 14 may switch to reduced functionality if not licensed or could stop working altogether.

In particular, the shown mechanism may also be extended to include not only the base license 12 of an application 14, but also include so-called add-ons of feature licenses 12. The user can decide to assign not only the base license 12 but also the license 12 for feature A and B to an application 14 instance. The managing and checkout procedures work the same as outlined above. However, it might be the case that the intent can only be partially fulfilled in that case, for example, the application 14 will run at reduced functionality because only some of the add-ons can be matched.

The mechanism may also be used to license devices 16 and device features as well as other artefacts such as artificial intelligence models, datasets and furthermore. The mechanism may always be the same, only the metadata will be different in these cases.

As an embodiment to the invention, the license management module 18 may also store all received license requests in a database. Whenever a new request is received, a request is removed, for example, a license 12 is returned, or a request is updated, the license management module 18 runs an optimization algorithm that tries to find an assignment of licenses 12 that fulfill all intents/specifications and as many requests as possible. This allows the management system 10 to change assignments on the fly in the phase of changing requests from devices 16.

As an example, in certain scenarios it is hard to decide which license 12 assigns to which device 16. For example, a base license 12 and a pro-license 12 are available, wherein the pro-license 12 includes the base license 12 and some add-on features. Assuming there are two devices 16, each running the application 14 that requests a license 12 for the base version. The license management module 18 now has to pick which device 16 to assign the base to and which the pro-version. As of now this decision does not matter as both requests can be satisfied with either licenses 12. Assuming the management system 10 assigns the pro-license, for example, to a first device 16. Assuming now, the user of the application 14 on the second device 16 wants to use the add-on features. The second device 16 may change its requests from a base version to a request for a pro-version. The license management module 18 re-optimizes the assignment of licenses 12 and discovers that a solution is possible if the pro-license 12 is assigned to a second device 16 instead of the first device 16. It can thus grant the second device's requests. This can be decided by the license management module 18 without needing to interact with the first device 16. Even if this device 16 is currently not reachable due to whatever reasons, the license 12 may still be assigned to the second device 16 as this server knows that the first device 16 is only using the base features from the stored request.

## Claims

1. A method for providing at least one user license (12) for an application (14) for at least one device (16) by a management system (10), comprising the steps of:
- providing the at least one user license (12) to be managed by a license management module (18) of the management system (10) ;
- determining a usage of the at least one user license (12) depending on a stored usage input (62) for the at least one device (16) by the license management module (18); and
- providing the at least one user license (12) for the at least one device (16) depending on the determined usage by the license management module (18).

2. A method according to claim 1, wherein the license management module (18) is provided as an online server.

3. A method according to claim 1, wherein the license management module (18) comprises a first layer (28), which is provided as an online server, and a second layer (30), which is provided as a local server.

4. A method according to any of claims 1 to 3, wherein metadata of the at least one license (12) are taken into consideration by managing the license (12).

5. A method according to claim 4, wherein as metadata a lifetime of the license (12) and/or an expiry date of the license (12) and/or a license attribute are taken into consideration.

6. A method according to any of claims 1 to 5, wherein the stored usage input (26) is determined depending a historical usage of that user license (12).

7. A method according to any of claims 1 to 6, wherein a priority of a device (16) from a plurality of devices (16) is determined and depending on the priority the at least one user license (12) is provided.

8. A method according to any of claims 1 to 7, wherein the license (12) is managed such, that add-ons required by the at least one device (16) and/or application (14) are taken into consideration.

9. A method according to any of claims 1 to 8, wherein a warning message for an expiration of the at least one user license (12) is generated by the license management module (18) .

10. A method according to any of claims 1 to 9, wherein at least a second application (14) for a second device (16) is provided, wherein at least a second user license (12) is provided, and depending on individual specifications of a first device (16) and the second device (16) the license management module (18) manages the licenses (12) such, that the individual specifications are fulfilled.

11. A method according to any of claims 1 to 10, wherein, if a new device (16) is installed, the license management module (18) assigns the at least one user license (12) to the new installed device (16).

12. A method according to any of claims 1 to 11, wherein the license management module (18) manages a plurality of different licenses (12) for a plurality of different applications (14) and/or devices (16).

13. A computer program product comprising program code means for performing a method according to any of claims 1 to 12.

14. A computer-readable storage medium comprising at least the computer program product according to claim 13.

15. A management system (10) for providing at least one user license (12) for an application (14) for at least one device (16), comprising at least one license management module (18), wherein the management system (10) is configured for performing a method according to any of claims 1 to 12.
